# EUROPÄISCHE PATENTSCHRIFT

(11) **EP 0 892 169 B1**
(45) Veröffentlichungstag und Bekanntmachung des Hinweises auf die Patenterteilung: **12.06.2002**
(21) Anmeldenummer: 97912519.2
(22) Anmeldetag: 19.11.1997
(51) Int. Cl.: F02M 35/024, F02M 35/10

(54) **LUFTEINLASS FÜR VERBRENNUNGSMOTOR**
INTAKE DEVICE OF INTERNAL COMBUSTION ENGINE
DISPOSITIF D'ADMISSION D'UN MOTEUR A COMBUSTION INTERNE

(30) Priorität: 22.11.1996 JP 31195096; 25.11.1996 JP 31394796
(43) Veröffentlichungstag der Anmeldung: 20.01.1999
(73) Patentinhaber: DENSO CORPORATION, Kariya-City Aichi-Pref. 448 (JP)
(72) Erfinder: YAMAGUCHI, Akihide, Aichi-Pref. 448 (JP); NOMURA, Yurio, Kariya-city,Aichi-Pref. 448 (JP); MIKAMI, Syuya, Aichi-Pref. 448 (JP); KAMEDA, Yasutoshi, Aichi-Pref. 448 (JP); NAKAYAMA, Toshiaki, Aichi-Pref. 448 (JP); YAMAMOTO, Takao, Aichi-Pref. 448 (JP)
(74) Vertreter: Tiedtke, Harro, Dipl.-Ing.
(86) Internationale Anmeldenummer: JP9704222
(87) Internationale Veröffentlichungsnummer: WO9822705

(56) Entgegenhaltungen:
- EP-A- 0 435 588
- EP-A- 0 523 028
- DE-A- 3 707 617
- JP-A- 3 260 366
- JP-A- 8 093 580
- JP-A- 8 210 199
- JP-U- 1 083 157
- JP-U- 1 176 743
- JP-U- 2 040 963
- JP-U- 2 069 057
- JP-U- 2 090 354
- JP-U- 5 057 352
- JP-U- 52 124 309
- JP-U- 58 173 657
- US-A- 5 269 143

## Beschreibung

Die vorliegende Erfindung bezieht sich auf eine Lufteinlaßeinheit gemäß dem Oberbegriff von Patentanspruch 1, insbesondere auf eine Konstruktion zur Reduzierung von Geräuschen, die von der Lufteinlaßeinheit abgestrahlt werden.

Das Europäische Patent 0 523 028B1 und die JP-A-7-229 454 offenbaren eine Lufteinlaßeinheit, mit der eine Vielzahl an Teilen integriert sind. In solchen Systemen ist ein Ansaugluftfilter in einem Luftfiltergehäuse angeordnet. Der Luftfilter hat eine abgedichtete Oberfläche, die durch die Innenwand des Luftfiltergehäuses abgedichtet und abgestützt wird.

Die JP-A-7 148 864 offenbart einen Einlaßkrümmer, der aus einem hohlen inneren Abschnitt blasgeformt ist, um eine Vielzahl an separaten außenseitigen Abschnitten zu haben, die danach zusammengeklebt werden.

Ein solcher Luftfilter, wie er in dem Europäischen Patent Nr. 0 523 028B1 oder der JP-A-7-229 454 offenbart ist, muß eine spezifische Form haben, um durch die Innenwand des Luftfiltergehäuses abgestützt zu werden. Es ist manchmal schwierig, einen Luftfilter, der ein spezifisch geformtes Filtergehäuse hat, zusammen mit verschiedenen Vorrichtungen in einem begrenzten Raum eines Motorraums zu installieren. Besonders wenn eine Vielzahl an Teilen in einer Lufteinlaßeinheit integriert ist, wird das System zu sperrig, um eingebaut zu werden. Solch ein Luftfilter hat das Problem des Leitens von Geräuschen der Ansaugluft von den Lufteinlaßdurchlässen, weil der Lufteinlaßdurchlaß eine einzige Wand hat. Zusätzlich erhöht eine Wärmeabstrahlung vom Motor die Temperatur des Ansaugkrümmers und der Ansaugluft, wodurch der Motorbetrieb verschlechtert wird.

Weil der Luftfilter, der in der JP-A-148 864 offenbart ist, doppelte Wände hat, wobei die außenseitigen Bauteile daran geklebt sind, können Geräusche und ein Temperaturanstieg um ein gewisses Ausmaß verhindert werden. Jedoch ist die Auswirkung nicht befriedigend, weil die außenseitigen Abschnitte lediglich an dem äußeren Umfang des inneren Abschnitts angeklebt sind.

Aus der US-A-5 269 143 ist eine Luftansaugeinheit bekannt, die einen Ansaugkrümmer mit einer Doppelwandkonstruktion aufweist. Zwischen der Innen- und der Außenwand des Ansaugkrümmers befindet sich ein Luftspalt, der als Isolationsschicht wirkt.

Aufgabe der vorliegenden Erfindung ist es, eine Lufteinlaßeinheit für einen Verbrennungsmotor zu schaffen, bei der die Übertragung von Geräuschen und ein Temperaturanstieg wirksam verhindert werden kann.

Ein weiteres Ziel der vorliegenden Erfindung ist es, ein Luftfiltergehäuse zu schaffen, dessen Gestalt leicht geändert werden kann.

Diese Aufgabe wird mit den Merkmalen des Anspruchs 1 gelöst. Vorteilhafte Weiterbildungen sind Gegenstand der Unteransprüche.

Als ein Ergebnis können pulsierende Geräusche, die ansonsten von dem Motor (10) nach draußen abgegeben werden, und ein Temperaturanstieg der Luft, die durch den Ansaugkrümmer (100) strömt, durch die Geräusche-und-Wärme-Isolationsschicht, die zwischen der Innenwand (14) und der Außenwand (16) ausgebildet ist, wirksam unterdrückt werden.

Als ein weiteres Ergebnis reduziert die Doppelwandkonstruktion und die Geräusche-und-Wärme-Isolationsschicht (18) des Filtergehäuses (12, 13) die Geräusche des Motors (10) und verbessert die Motorfunktion. Zusätzlich bildet der Ansaugkrümmer (100), der in dem Filtergehäuse (12, 13) untergebracht ist, die Doppelwandkonstruktion, so daß die Lufteinlaßeinheit einfach gemacht werden kann. Ein Luftfilter (21), der mit dem Ansaugkrümmer (100) in demselben Gehäuse integriert ist, macht die Lufteinlaßeinheit so kompakt, daß sie leicht in einen Motor (10) eingebaut werden kann.

Fig. 1 ist eine Längsschnittansicht, die eine Lufteinlaßeinheit für einen Verbrennungsmotor gemäß einem ersten Ausführungsbeispiel zeigt, geschnitten entlang der Linie I-I in Fig. 2.

Fig. 2 ist eine Längsschnittansicht, die die Lufteinlaßeinheit zeigt, die in Fig. 1 dargestellt ist.

Fig. 3 zeigt eine Schnittansicht der Lufteinlaßeinheit, geschnitten entlang der Linie III-III in Fig. 2.

Fig. 4 ist eine perspektivische Ansicht des Luftfilters, der in den Figuren 1 und 2 dargestellt ist.

Fig. 5 ist eine vergrößerte Teilansicht einer Abstützung der Auslaßleitung, die in Fig. 2 dargestellt ist.

Fig. 6 ist eine Teilschnittansicht, die eine Stützkonstruktion des Luftfilters darstellt.

Fig. 7 ist eine Teilschnittansicht, die eine andere Stützkonstruktion des Luftfilters darstellt.

Die Figuren 8 und 9 sind Teilschnittansichten eines Ausgleichsspeichers, der durch geschäumtes Kunstharz bedeckt ist.

Die Figuren 10 und 11 sind Teilschnittansichten eines Ansaugkrümmers, der durch geschäumten Kunstharz bedeckt ist.

Die Ausführungsbeispiele der vorliegenden Erfindung werden unter Bezugnahme auf die beigefügten Zeichnung im folgenden beschrieben.

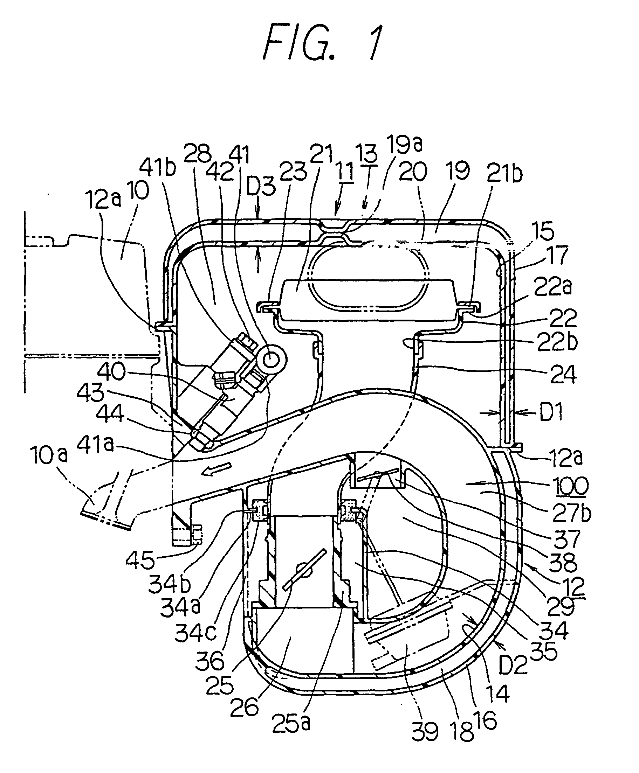

Die Figuren 1 bis 6 stellen eine Lufteinlaßeinheit für einen Fahrzeugantriebsmotor gemäß einem ersten Ausführungsbeispiel dar. Ein Verbrennungsmotor 10 hat vier Zylinder und eine erfindungsgemäße Lufteinlaßeinheit 11 ist nahe des Motors 10 angeordnet. Die Lufteinlaßeinheit 11 hat verschiedene Teile davon in einem kompakten Raum integriert. Ein Gehäuse der Lufteinlaßeinheit 11 ist aus einem sich vertikal erstreckenden Hauptgehäuse 12, das ein Bodenbauteil hat, und einer Kappe 13, die ein oberes Bauteil zum Schließen der oberen Öffnung 12a des Hauptgehäuses 12 hat, zusammengesetzt. Die Kappe 13 ist an dem Öffnungsabschnitt 12a des Hauptgehäuses 12 durch eine Vielzahl von Gelenken (nicht gezeigt) befestigt, so daß die Kappe 13 leicht geöffnet oder geschlossen werden kann. Das Gehäuse ist mit einem Klemmbauteil zum abnehmbaren Halten der Kappe 13 versehen.

Das Hauptgehäuse 12 und die Kappe 13 sind jeweils aus elastischem und zähem Material wie beispielsweise Nylon geformt. Das Hauptgehäuse 12 und die Kappe 13 haben jeweils doppelt geschichtete Wände, die aus Innenschichten 14, 15 und Außenwänden 16, 17 zusammengesetzt sind. Jede der Innenschichten 14, 15 und der entsprechenden einen der Außenwände 16, 17 bilden dazwischen eine der Luftschichten 18, 19 aus, die eine Dicke von beispielsweise 2 bis 3 mm hat.

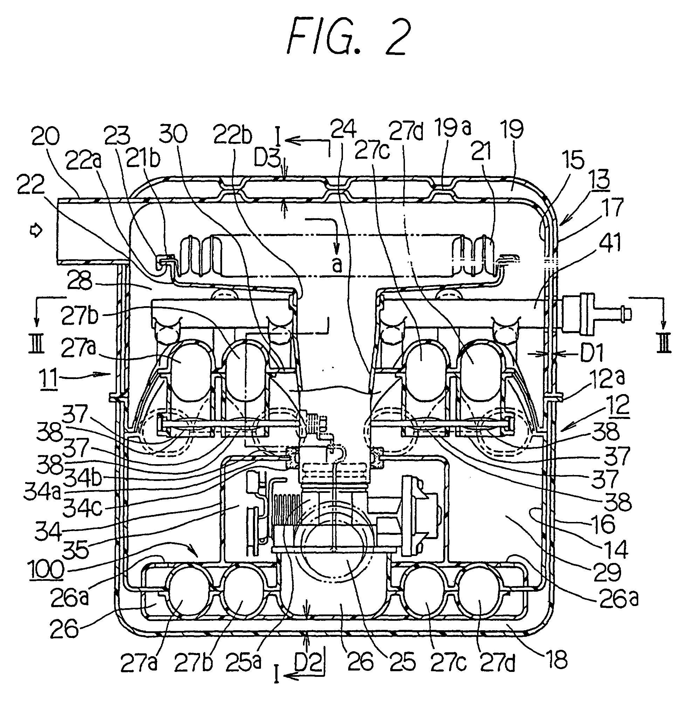

Die Luftschichten 18, 19 verhindern eine Übertragung der Geräusche und der Wärme. In den Figuren 1 und 2 beträgt die Dicke der Luftschichten 18, 19 beispielsweise 2 bis 3 mm am engsten Abschnitt, D2 beträgt beispielsweise 5 bis 8 mm im mittleren Abschnitt und D3 beträgt beispielsweise 12 bis 18 mm am breitesten Abschnitt der Kappe 13. Die Dickenschwankung von D1 bis D3 wird hauptsächlich durch den Formprozeß hervorgerufen. Eine Vielzahl an Paaren von Vorsprüngen 19a, die aneinander grenzen, sind an den Abschnitten der Innenund Außenwände 15, 17 der Kappe 13 ausgebildet, die der Luftschicht 19 mit der Dicke D3 entsprechen, wodurch eine Steifigkeit der Kappe 13 erhöht wird, um eine Vibration davon zu unterdrücken. Die Dicke der Luftschichten 18, 19 beträgt vorzugsweise 2 oder mehr mm , um eine Übertragung von Geräuschen und Wärme zu verhindern.

Die Kappe 13 hat einen sich horizontal erstreckenden Lufteinlaß 20, der mit einer Seite davon integriert ist, um Außenluft vom Motorraum einzuführen. Der Querschnitt des Lufteinlasses 20 ist im allgemeinen elliptisch (wie in Fig. 1 gezeigt). Der Luftfilter 21 zur Reinigung der von dem Lufteinlaß 20 eingeführten Luft ist unterhalb der Oberseite der Innenwand 15 der Kappe 13 angeordnet.

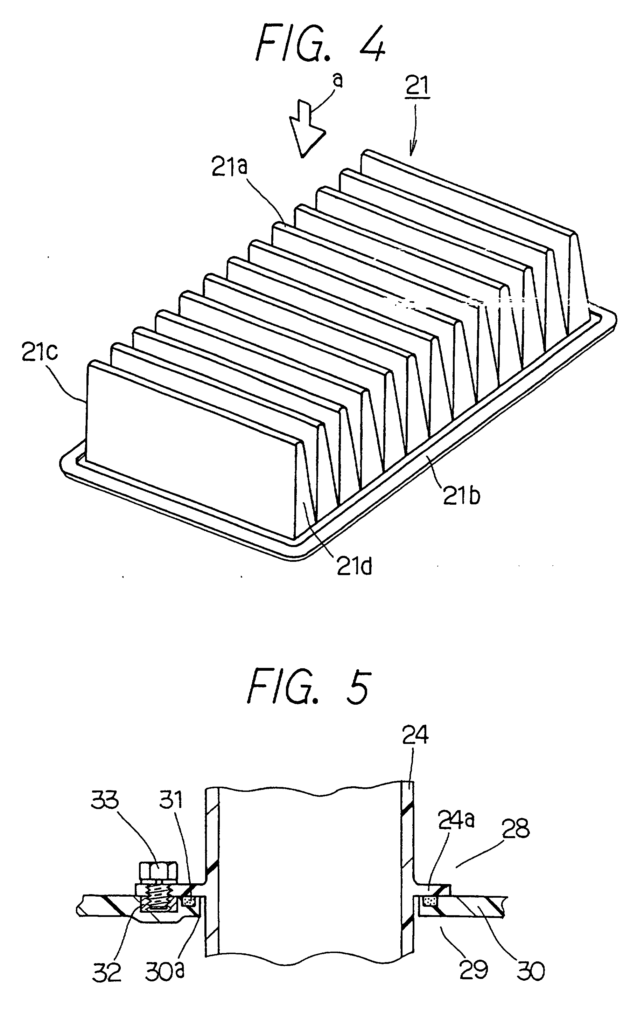

Der Luftfilter 21 hat ein gefaltetes Bauteil 21a, das im allgemeinen rechtwinklig ist und einen Flanschabschnitt 21b rundherum hat, wie in Fig. 4 gezeigt ist. Das gefaltete Bauteil 21a und der Flanschabschnitt 21b sind einstückig aus demselben Filtermaterial (ungewebtes Textilgewebe oder Filterpapier) geformt. Gegenüber liegende Seiten 21c, 21d eines jeden gefalteten Abschnitts des Filterbauteils 21a sind geschlossen, um eine Tasche zu bilden. Wenn Luft durch das Filterbauteil 21a strömt, wie durch den Pfeil **a** in Fig. 4 und Fig. 2 gezeigt, werden Staub und dgl. von der Luft entfernt, wodurch die Luft gereinigt wird.

Eine rechtwinklige pfannenförmige Filterstütze 22 aus Kunstharz ist unter dem Luftfilter 21 angeordnet und ein Flanschabschnitt 22a, der um die Filterstütze 22 herum ausgebildet ist, stützt den Flanschabschnitt 21b des Luftfilters 21 ab. Der Flanschabschnitt 22a und der Flanschabschnitt 21b sind durch eine Klemme 23 abnehmbar befestigt. Deshalb wird der Luftfilter 21 durch die Filterstütze 22 getrennt von dem Hauptgehäuse 12 und der Kappe 13 abgestützt und gehalten.

Die Filterstütze 22 hat in ihrer Mitte ein zylindrisches Bauteil 22b zum Ausbringen der gereinigten Luft. Das zylindrische Bauteil 22b ist an den oberen Abschnitt der Auslaßleitung 24 geschweißt. Die Auslaßleitung 24 ist im allgemeinen zylindrisch und sie ist in der Mitte des Raums, der durch das Hauptgehäuse 12 und die Kappe 13 ausgebildet wird, angeordnet. Die Auslaßleitung 24 erstreckt sich senkrecht und ist am unteren Abschnitt davon nach links gebogen, wie in Fig. 1 gezeigt ist.

Das untere Ende der Auslaßleitung 24 ist mit dem oberen Ende eines Körpers 25a aus Kunstharz der Drosselklappeneinheit 25 verbunden. Die Drosselklappeneinheit 25 steuert die Luft, die in den Verbrennungsmotor 10 angesaugt wird, in Abhängigkeit von der Betätigung einer Beschleunigungsvorrichtung in einer bekannten Art und Weise. Ein Ausgleichstank 26 ist unter der Drosselklappeneinheit 25 (an der stromabwärtigen Seite davon) angeordnet, um die Schwankung der Ansaugluft abzumildern.

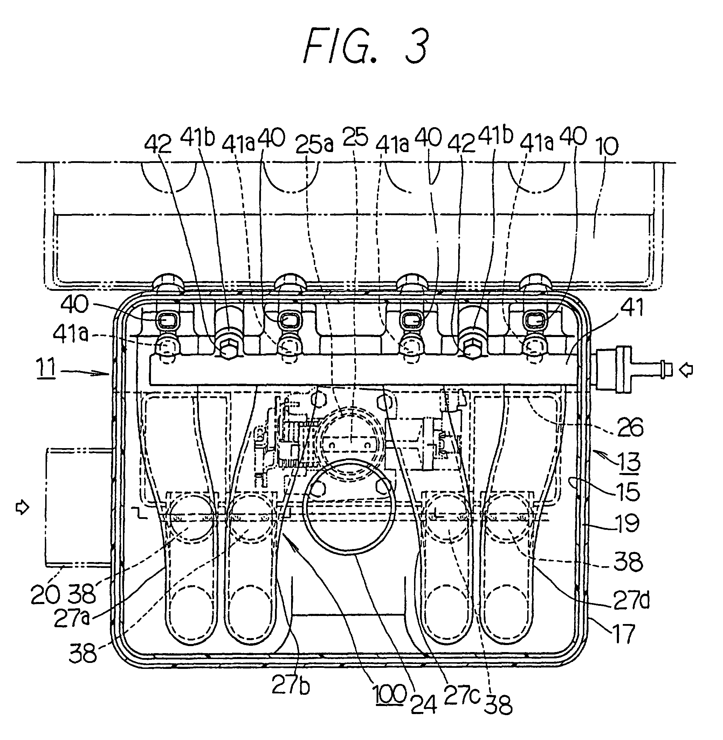

Der Ausgleichstank 26 ist am untersten Abschnitt im Inneren des Hauptgehäuses 12 angeordnet und ist rechtwinklig, wie durch die gestrichelten Linien in Fig. 3 gezeigt ist. Einlässe der Ansaugkrümmerrohre 27a bis 27d öffnen sich in das Innere des Ausgleichstanks 26. Es gibt vier Ansaugkrümmerrohre, die den vier Zylindern des Motors 10 in diesem Ausführungsbeispiel entsprechen.

Die Ansaugkrümmerrohre 27a, 27c, 27d, die nicht in Fig. 1 gezeigt sind, haben fast dieselbe Gestalt wie das Ansaugkrümmerrohr 27b. D.h., jedes hat einen 180° halbkreisförmigen Abschnitt, der sich vom unteren Abschnitt des Raumes nach oben erstreckt, und einen geraden Abschnitt, der sich davon nach vorne zu einer der Ansaugöffnungen 10a des Motors 10 erstreckt.

Das Hauptgehäuse 12 wird durch Schraubenbolzen 45 oder dgl. (in Fig. 1 gezeigt) befestigt, um die Ansaugkrümmerrohre 27a bis 27d mit den Ansaugöffnungen 10a zu verbinden.

Ein Staubseitenraum 28 ist im Inneren der Kappe 13 angeordnet und mit dem Lufteinlaß 20 verbunden. Ein Reinseitenraum 29 ist im Inneren des Hauptgehäuses 12 angeordnet und mit dem Inneren des Ausgleichstanks 26 durch eine Vielzahl von Verbindungslöchern 26a (in Fig. 2 gezeigt) verbunden. Der Staubseitenraum 28 im Inneren der Kappe 13 und der Reinseitenraum 29 im Inneren des Hauptgehäuses 12 sind durch die Krümmerrohre 27a bis 27d und durch Trennwände 30 aus Kunstharz, die einstückig zwischen den Rohren ausgebildet sind, voneinander getrennt (wie in Fig. 2 gezeigt ist). Wie in Fig. 5 gezeigt ist, die eine vergrößerte Ansicht der relevanten Abschnitte ist, erstreckt sich eine Auslaßleitung 24 durch ein Loch 30a, das in dem mittigen Abschnitt der Trennwand 30 ausgebildet ist, und eine ringförmige Gummidichtungsscheibe 31 ist um das Durchgangsloch 30a herum angeordnet. Die Auslaßleitung 24 hat einen ringförmigen Flanschabschnitt 24a, der damit integriert ist, um die Dichtungsscheibe 31 dadurch zusammenzudrücken.

Eine Vielzahl an Muttern 32 ist in Abschnitte der Trennwand 30 um die Dichtungsscheibe 31 herum einsatzgeformt, so daß die Auslaßleitung 24 abnehmbar befestigt und hermetisch abgedichtet werden kann, nachdem die Schraubenbolzen 33 in die entsprechenden Muttern 32 eingeschraubt wurden.

Wie in den Figuren 1 und 2 gezeigt ist, erstreckt sich eine Trennwand 34 aus Kunstharz von der oberen Wandoberfläche des Ausgleichstanks 26 um den Körper 25a aus Kunstharz der Drosselklappeneinheit 25 herum, um einen Raum 35 um die Drosselklappeneinheit 25 herum von dem Reinseitenraum 29 des Hauptgehäuses 12 zu trennen. Der Raum 35 ist durch eine Öffnung 36 mit dem Inneren des Motorraums verbunden, mit anderen Worten, er ist mit dem Staubseitenraum verbunden. Die Öffnung 36 ist so ausgebildet, daß die Drosselklappeneinheit 25 hierdurch in das Innere des Gehäuses 12 eingebaut werden kann.

Ein oberer Mittelabschnitt 34a der Trennwand 34 hat ein Durchgangsloch 34b, durch das sich ein unterer Abschnitt der Auslaßleitung 24 erstreckt und eine Gummidichtungsscheibe 34c, die in dem Durchgangsloch 34b eingesetzt ist, um den Staubseitenraum 35 von dem Reinseitenraum 29 zu isolieren.

"Der Ansaugkrümmer 100" bedeutet eine Konstruktion, die aus einem Kunstharzmaterial hergestellt ist und einen Ausgleichstank 26, Ansaugkrümmerrohre 27a bis 27d und Trennwände 30, 34 enthält. Der Ansaugkrümmer 100, der in dem Hauptgehäuse 12 eingesetzt ist, bildet ein Hauptgehäuse 12 mit einer Doppelwandkonstruktion. Mit anderen Worten, die Wand der mit Durchlässen ausgebildeten Außenwand 16 des Hauptgehäuses 12 besteht aus der Innenwand 14.

Ein Durchlaß 37, der mit dem Reinseitenraum 29 verbunden ist, ist in einem Abschnitt eines jeden der Ansaugkrümmerrohre 27a bis 27d ausgebildet und ein bewegliches Luftansaugventil 38 ist darin eingebaut, um durch eine Betätigungsvorrichtung 39 wie beispielsweise einem Unterdruckmotor geöffnet oder geschlossen zu werden.

Die Auslaßseite eines jeden der Ansaugkrümmerrohre 27a bis 27d (stromaufwärts der Ansaugöffnung 10a des Motors 10) hat eine Einspritzdüse 40 zum Einspritzen von Kraftstoff (Benzin). Wie in Fig. 1 gezeigt ist, ist die Kraftstoffeinspritzdüse 40 im Staubseitenraum 28 angeordnet und die Kraftstofflieferleitung 41 hat Verzweigungsleitungen 41a. Jede der Verzweigungsleitungen 41a ist mit einer der Kraftstoffeinspritzdüsen 40 verbunden, wobei deren spitzes Ende über eine Dichtung in den Kraftstoffeinlaß der Kraftstoffeinspritzdüse 40 eingepaßt ist.

Ein Paar Flansche 41b sind an unterschiedlichen Abschnitten der Kraftstoffversorgungsleitung 41 ausgebildet, um dieselben an Sockeln 43, die auf dem Hauptgehäuse 12 ausgebildet sind, zu befestigen, wodurch die Einspritzdüsen 40 und die Kraftstoffversorgungsleitung 41 abnehmbar an den Sockeln 43 befestigt sind. Die Kraftstoffeinspritzdüsen 40 sind über Gummidichtungsscheiben 44 hermetisch an den Sockeln 43 befestigt, so daß die Außenluft in dem Staubseitenraum 28 daran gehindert werden kann, in die Ansaugkrümmerrohre 27a bis 27d zu gelangen.

Die Kraftstoffeinspritzdüsen werden elektromagnetisch gesteuert, um die Ventile in einer bekannten Art und Weise zu öffnen. Ein Ende (das rechte Ende in Fig. 3) der Kraftstofflieferleitung 41 steht von dem Hauptgehäuse 12 nach außen vor, um durch eine Kraftstoffleitung mit einer Kraftstoffversorgungspumpe verbunden zu werden (nicht gezeigt), um von der Kraftstofflieferpumpe gelieferten Kraftstoff in die Kraftstoffversorgungsleitung 41 einzuführen.

Der Betrieb des obigen Systems wird im nachfolgenden beschrieben. Wenn der Verbrennungsmotor betrieben wird, wird Außenluft in einen Lufteinlaß 20 der Kappe 13 eingesaugt. Die Luft strömt in einen Raum 28und geht durch ein Filterbauteil 21a des Filters 21 in die Richtung, die durch einen Pfeil **a** in den Figuren 4 und 2 angezeigt ist, so daß Staub in der Luft entfernt werden kann und diese gereinigt werden kann.

Die gereinigte Luft wird durch eine pfannenförmige Filterstütze 22 und eine Auslaßleitung 24 in die Drosselklappeneinheit 25 eingeführt, wodurch die Luftströmungsgeschwindigkeit gesteuert wird. Wenn die Luft durch den Ausgleichstank 26 geht, wird die Pulsierung gemäßigt. Nachfolgend wird die Luft auf die jeweiligen Luftkrümmerrohre 27a bis 27d verteilt, um zu den jeweiligen Zylindern des Verbrennungsmotors 10 geleitet zu werden.

Andererseits wird der Kraftstoff durch die Kraftstofflieferpumpe (nicht gezeigt) gepumpt und an die Kraftstofflieferleitung 41 geleitet, um an die jeweiligen Kraftstoffeinspritzdüsen 40 verteilt zu werden. Die Kraftstoffeinspritzdüsen 40 sind elektronisch gesteuert, um Kraftstoff in die Auslaßabschnitte der jeweiligen Ansaugkrümmerrohre 27a bis 27d einzuspritzen. Somit werden der Kraftstoff und die Luft vermischt und von der Ansaugöffnung 10a in die jeweiligen Zylinder des Motors 10 eingeführt.

In der Lufteinlaßeinheit 11, die angrenzend an den Motor 10 angeordnet ist, haben sowohl das Gehäuse 12 als auch die Kappe 13 Doppelwände, die Luftschichten 18, 19 zwischen den Innenwänden 14, 15 und den Außenwänden 16, 17 enthalten, um eine Übertragung von Geräuschen und Wärme zu verhindern.

Als ein Ergebnis kann die Pulsierung der Geräusche der Luft, die in die Motorzylinder des Motors 10 angesaugt wird, die ansonsten durch das Hauptgehäuse 12 und die Kappe 13 nach draußen ausgegeben würden, durch die oben beschriebenen Luftschichten 18, 19 wirksam unterdrückt werden.

Zusätzlich mildern die Luftschichten 18, 19 den Temperaturanstieg im Inneren des Hauptgehäuses 12 und der Kappe 13 aufgrund der Wärmeabstrahlung vom Motor 10. Dies hält die Temperatur der Luft, die in den Ansaugkrümmer 100 eingeführt wird, vergleichsweise niedrig, wodurch die Motorfunktion hoch gehalten wird.

Da die Kraftstoffeinspritzdüsen 40 im Staubseitenraum 28 angeordnet sind, der durch die Kappe 13 und das Hauptgehäuse 12 gebildet wird, wie in Fig. 1 gezeigt ist, können auch Betriebsgeräusche der Kraftstoffeinspritzdüse 40 durch die Luftschichten 18, 19 wirksam daran gehindert werden, nach draußen zu gelangen.

Da die Luftschichten 18, 19 zwischen den Innenwänden 14, 15 und den Außenwänden 16, 17 ausgebildet sind, um die Übertragung der Geräusche und der Wärme gemäß diesem Ausführungsbeispiel zu unterdrücken, kann das Gewicht des Filtergehäuses minimiert werden.

Im nachfolgenden wird ein Verfahren zur Ausbildung eines Hauptgehäuses 12, einer Kappe 13 und eines Ansaugkrümmers 100 beschrieben. Das Hauptgehäuse 12 und der Ansaugkrümmer 100 sind aus einem Kunstharzmaterial ausgebildet, der einen Schmelzpunkt hat, der niedriger als der derjenige des hohlen Bauteils ist, das die Luftschicht 18 enthält. Dies ist der sogenannte Wachsausschmelzguß.

Das Hauptgehäuse 12 und der Ansaugkrümmer 100 können aus einer Vielzahl von geformten Stücken, die mittels Vibrationsschweißen verschweißt sind, ausgebildet werden.

Das hohle Bauteil, das die Luftschicht 18 enthält, kann durch ein Gaslufteinspritzformen, Blasformen oder Mehrstückformen (multi-piece-molding) ausgebildet werden.

Die Kappe 13, die die Doppelwandkonstruktion hat, die die Luftschicht 19 enthält, kann durch Blasformen ausgebildet werden. Sie kann auch durch eine Vielzahl an geformten Stücken ausgebildet werden, die durch Vibrationsschweißen verschweißt sind.

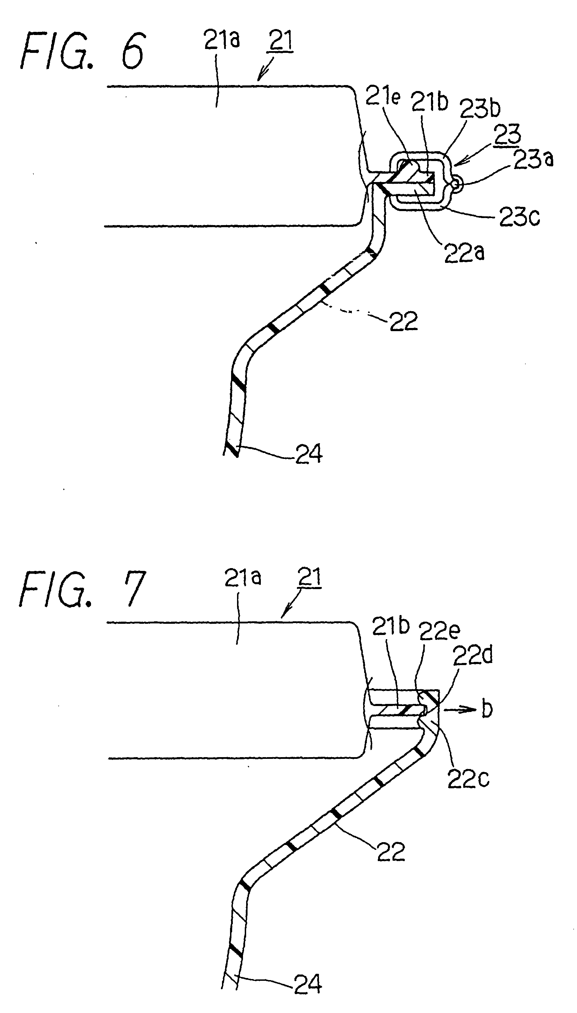

Fig. 6 stellt eine Stützkonstruktion eines Luftfilters 21 und eine Filterstütze 22 dar. Eine Rippe 21e ist einstückig auf der oberen Oberfläche des Flanschabschnitts 21b des Luftfilters 21 ausgebildet. Der Flanschabschnitt 21b ist auf dem Flanschabschnitt 22a der Filterstütze 22 aufgesetzt und eine Klemme 23 aus Kunstharz oder Metall gelangt mit der Rippe 21e in Eingriff, um beide Flanschabschnitte 21b und 22a zu pressen, wodurch der Luftfilter 21 und die Filterstütze 22 zusammen befestigt werden.

Die Klemme 23 hat einen Schwenkpunkt 23a und ein Hakenpaar 23b, 23c die darauf schwenken.

Die Filterstütze 22 kann eine Stützwand 22c an ihrem offenen Ende haben, wie in Fig. 7 gezeigt ist. Die Stützwand 22c erstreckt sich entlang der Dicke des Luftfilters um den äußeren Umfang des Flanschabschnitts 21b des Luftfilters 21 herum und hat eine Nut 22d, die den Außenumfang des Flanschabschnitts 21b aufnimmt.

Wenn der Flanschabschnitt 21b in die Nut 22d eingesetzt wird, wird die Stützwand 22c nach außen gebogen (wie durch den Pfeil b in Fig. 7 gezeigt ist), so daß der Außenumfang des Flanschabschnitts 21b in die Nut 22d quer über den konvexen Abschnitt 22e gelangen kann. Wenn der Flanschabschnitt 21b in die Nut 22d gelangt ist, springt die Stützwand 22c zurück, um den Flanschabschnitt 21b in der Nut 22d zu erhalten.

Wie in den Figuren 6 und 7 gezeigt ist, kann eine Filterstütze 22, die getrennt von dem Filter 21 in dem obigen Ausführungsbeispiel ausgebildet ist, einstückig mit der Auslaßleitung 24 gebildet werden.

### (Andere Ausführungsbeispiele)

Für die Luftschichten 18, 19, die zwischen den Innenwänden 14, 15 und den Außenwänden 16, 17 angeordnet sind, kann Polyurethanschaum oder ein anderes Geräusch-und-Wärme-Isolationsbauteil verwendet werden. Ein solches Geräusch-und-Wärme-Isolationsbauteil kann durch Schäumen von Abschnitten der Innen- und Außenwände ausgebildet werden.

Wenn der Ansaugkrümmer 100 außerhalb des Filtergehäuses angeordnet ist, ist der Ansaugkrümmer 100 so ausgebildet, daß er eine Doppelwandkonstruktion hat, die von dem Luftfiltergehäuse getrennt ist, und das Geräusch-und-Wärme-Isolationsbauteil zwischen den Innen- und Außenwänden angeordnet ist. Wenn ein solches Geräusch-und-Wärme-Isolationsbauteil plaziert wird, um eine Oberfläche oder beide Oberflächen des Hauptgehäuses 12, der Kappe 13 oder des Ansaugkrümmers 100 abzudecken, ist die Doppelwandkonstruktion nicht notwendig. Ein geschäumter Kunstharz kann zugefügt werden, um ein derartiges Schaumbauteil zu bilden, wenn das Hauptgehäuse 12, die Kappe 13 oder der Ansaugkrümmer 100 geformt werden.

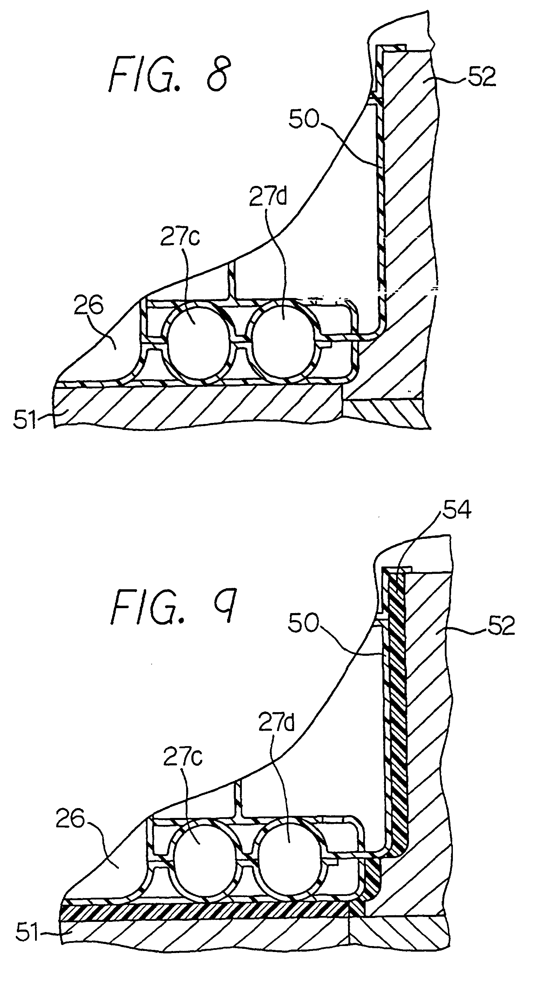

Die Figuren 8 und 9 stellen ein Hauptgehäuse 12 dar, das eine einzige Wand 50 hat, die durch den geschäumten Kunstharz 54 von außen bedeckt ist. Fig. 8 stellt einen Ansaugkrümmer 100 dar, der einen Ausgleichstank 26 und Einlaßkrümmerleitungen 27a bis 27d in den Formen 51, 52 hat. Eine Form 51 kann nach unten bewegt werden, und die Form 52 kann durch die Bewegung, wie sie in Fig. 9 gezeigt ist nach rechts bewegt werden, so daß das geschäumte Kunstharz 54 für das Geräusch-und-Wärme-Isolationsbauteil in die Räume eingebracht werden kann.

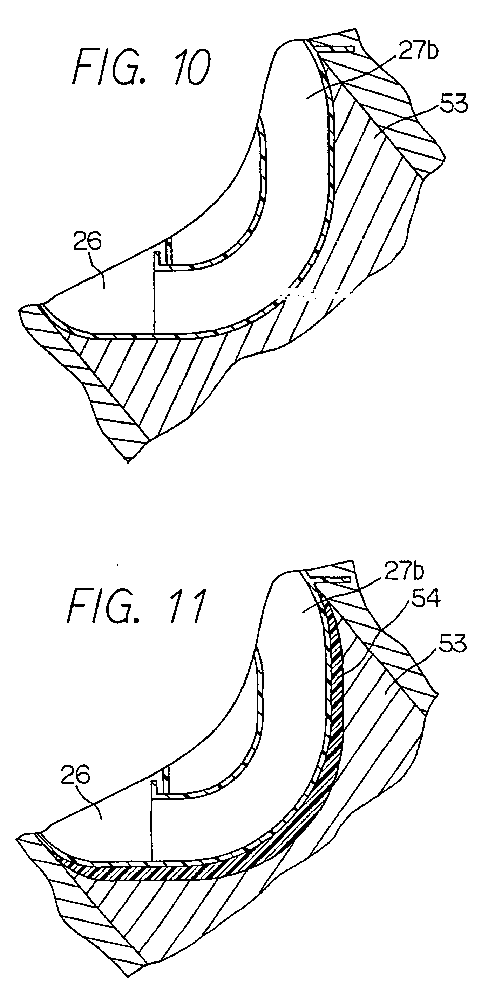

Die Figuren 10 und 11 stellen einen Abschnitt von Ansaugkrümmerleitungen 27a bis 27d dar, der eine einzige Wandkonstruktion hat, die durch den geschäumten Kunstharz 54 bedeckt ist. Fig. 10 stellt einen Abschnitt des Ansaugkrümmers 100 dar, der aus einem Ausgleichstank 26 und Ansaugkrümmerrohren 27a bis 27d in der Form 53 zusammengesetzt ist. Die Form 53 kann nach rechts bewegt werden, um einen Raum zu bilden, in den geschäumter Kunstharz 54 eingebracht wird, um ein Geräusch-und-Wärme-Isolationsbauteil zu bilden, wie in Fig. 11 gezeigt ist.

Gemäß dem obigen Ausführungsbeispiel kann der Luftfilter 21 ohne Rücksicht auf die Schnittstelle des Hauptgehäuses 12 und der Kappe 13 abgestützt werden, so daß der Freiheitsgrad bei der Konstruktion des Hauptgehäuses 12 und der Kappe 13 vergrößert werden kann, die sich über die Länge der Zylinderreihe des Motors 10 erstrecken. Es ist nicht notwendig, den Luftfilter 21 so zu konstruieren, daß er eine spezielle Größe hat.

Es ist auch nicht notwendig, den Luftfilter 21 von dem Kraftstoffversorgungssystem zu entfernen, wenn die Kraftstoffeinspritzdüsen 40 und die Kraftstoffzuführleitung 41 im Inneren des Hauptgehäuses 12 und der Kappe 13 eingebaut sind. Demgemäß kann die Instandhaltung ohne Entfernung des Luftfilters 21 ausgeführt werden, wodurch verhindert wird, daß während der Instandhaltungsarbeit Staub in die Reinseite gelangt, die an der stromabwärtigen Seite des Luftfilters 21 angeordnet ist.

Eine Filterstütze 22 kann zur einfacheren Instandhaltungsarbeit weiter von dem Kraftstoffliefersystem getrennt werden, als dieselbe, die in Fig. 1 gezeigt ist.

Weil die Filterstütze 22 von dem Hauptgehäuse 12 und der Kappe 13 getrennt ist und wie ein Pilz steht, wird verhindert, daß Staub, der in das Innere des Hauptgehäuses 12 und der Kappe 13 gelangt ist, in das Innere der Filterstütze 22 gelangt, wenn der Filter 21 ausgetauscht wird.

Somit kann die Filterstütze 22 den Luftfilter 21 getrennt von dem Gehäuse 12 und der Kappe 13 stützen und die zylindrische Filterstütze 22 wird durch sich selbst von den Innenwänden des Hauptgehäuses 12 und der Kappe 13 getrennt.

Gemäß der vorliegenden Erfindung sind Wände von Gehäusen 12, 13 mit einer Geräusch-und-Wärme-Isolationsschicht vorgesehen, um Geräusche und Wärme von einem Motor zu unterdrücken. Ein Ansaugkrummer 100 ist in den Gehäusen 12, 13 untergebracht, so daß verschiedene Teile relativ zur Lufteinlaßeinheit in einen kompakten Raum integriert werden können. Ein Luftfilter 21 wird getrennt von dem Filtergehäuse 12, 13 abgestützt, so daß die Gestalt des Filtergehäuses 12, 13 ohne viele Beschränkungen konstruiert werden kann.

Somit kann die vorliegende Erfindung wirksam und leicht auf Lufteinlaßeinheiten für Motoren angewandt werden.

Eine Lufteinlaßeinheit ist aus einem Luftfilter 21 zur Filterung der Luft, die in einem Verbrennungsmotor 10 angesaugt wird, einem Ansaugkrümmer 100 aus Kunstharz zum Einführen der durch den Luftfilter 21 gefilterten Luft in Ansaugöffnungen 10a des Motors, aus einem Gehäuse 12 aus Kunstharz und einer Kappe 13 aus Kunstharz zusammengesetzt. Der Luftfilter 21, der Ansaugkrümmer 100 und Kraftstoffeinspritzdüsen 40 sind in dem Gehäuse 12 und der Kappe 13 angeordnet. Das Gehäuse 12 und die Kappe 13 haben jeweils eine Doppelwandkonstruktion, die aus Innenwänden 14, 15 und Außenwänden 16, 17 und Geräusch-und-Wärme-Isolationsschichten 18, 19 zwischen den Innenwänden 14, 15 und den Außenwänden 16, 17 zusammengesetzt ist.

## Patentansprüche

1. Lufteinlaßeinheit für einen Verbrennungsmotor, die die folgenden Bauteile aufweist:
einen Luftfilter (21) zum Filtern von Luft, die an den Verbrennungsmotor (10) geliefert wird,
ein Filtergehäuse (12, 13) zur Unterbringung des Luftfilters (21), und
einen Ansaugkrümmer (100) zum Einführen der durch den Luftfilter (21) gefilterten Luft in eine Lufteinlaßöffnung (10a),
**dadurch gekennzeichnet, daß**
der Ansaugkrümmer (100) in dem Filtergehäuse (12, 13) angeordnet ist und zusammen mit dem Filtergehäuse (12, 13) eine Doppelwandkonstruktion bildet, die aus einer Durchlaßwand des Ansaugkrümmers (100), die in einer Innenwand (14) ausgebildet ist, und einer Wand des Filtergehäuses (12, 13) die in einer Außenwand (16) ausgebildet ist, zusammengesetzt ist, wobei eine Geräusche-und-Wärme-Isolationsschicht (18) zwischen der Innenwand (14) und der Außenwand (16) angeordnet ist.

2. Lufteinlaßeinheit gemäß Anspruch 1, **dadurch gekennzeichnet, daß** ein Teil (40, 41) eines Systems zur Lieferung von Kraftstoff an den Motor (10) in dem Gehäuse (12, 13) untergebracht ist.

3. Lufteinlaßeinheit gemäß Anspruch 2, **dadurch gekennzeichnet, daß** der Teil des Systems zur Lieferung von Kraftstoff eine Einspritzdüse (40) zur Einspritzung von Kraftstoff in den Verbrennungsmotor (10) ist.

4. Lufteinlaßeinheit gemäß einem der Ansprüche 1 bis 3, **dadurch gekennzeichnet, daß** das Filtergehäuse (12, 13) eine Doppelwandkonstruktion hat, die aus der Innenwand (14, 15) und der Außenwand (16, 17) und einem Geräusch-und-Wärme-Isolationsbauteil (18, 19) zusammengesetzt ist, das zwischen der Innenwand (14, 15) und der Außenwand (16, 17) angeordnet ist.

5. Lufteinlaßeinheit gemäß einem der Ansprüche 1 bis 4, **dadurch gekennzeichnet, daß** das Geräusch-und-Wärme-Isolationsbauteil eine Luftschicht (18, 19) ist.

6. Lufteinlaßeinheit gemäß einem der Ansprüche 1 bis 4, **dadurch gekennzeichnet, daß** das Geräusch-und-Wärme-Isolationsbauteil ein Geräusch-und-Wärme-Isolationsmaterial ist, das zwischen der Innenwand (14, 15) und der Außenwand (16, 17) eingefüllt ist.

7. Lufteinlaßeinheit gemäß einem der Ansprüche 1 bis 4 und 6, **dadurch gekennzeichnet, daß** die Geräusch-und-Wärme-Isolationsschicht aus einem geschäumten Material hergestellt ist.

8. Lufteinlaßeinheit gemäß Anspruch 7, **dadurch gekennzeichnet, daß** die Geräusch-und-Wärme-Isolationsschicht ein Bauteil aufweist, das aus einem geschäumten Material hergestellt ist, das an das Filtergehäuse (12, 13) angeklebt ist.

9. Lufteinlaßeinheit gemäß Anspruch 7, **dadurch gekennzeichnet, daß** die Geräusch-und-Wärme-Isolationsschicht aus einem geschäumten Material hergestellt ist, wenn das Filtergehäuse (12, 13) gebildet wird.

10. Lufteinlaßeinheit gemäß einem der voranstehenden Ansprüche 1 bis 9, des weiteren **gekennzeichnet durch**
eine Auslaßleitung (24), die in dem Filtergehäuse zur Einführung der **durch** den Luftfilter (21) gefilterten Luft angeordnet ist, wobei die Auslaßleitung (24) eine Filterabstützung (22) an ihrem offenen Ende hat, die den Luftfilter (21) getrennt von dem Filtergehäuse (12, 13) abnehmbar abstützt.

11. Lufteinlaßeinheit gemäß Anspruch 10, **dadurch gekennzeichnet, daß**
in dem Filtergehäuse eine Drosselklappe (25) untergebracht ist, die mit der Auslaßleitung (24) und dem Ansaugkrümmer (100) verbunden ist.

12. Lufteinlaßeinheit gemäß Anspruch 11, **dadurch gekennzeichnet, daß**
der Luftfilter (21) und die Filterabstützung (22) an einem oberen Abschnitt des Filtergehäuses (12, 13) angeordnet sind, und
die Auslaßleitung (24), die Drosselklappe (25) und der Ansaugkrümmer (100) in dem Filtergehäuse (12, 13) tiefer als der Luftfilter (21) und die Filterabstützung (22) angeordnet sind.

13. Lufteinlaßeinheit gemäß einem der Ansprüche 10 bis 12, **dadurch gekennzeichnet, daß**
der Luftfilter (21) ein Filterbauteil (21a) zum Filtern der Ansaugluft und einen Flanschabschnitt (21b) hat, der sich von einem äußeren Umfang des Filterbauteils (21a) nach außen erstreckt,
die Filterabstützung (22) einen Flanschabschnitt (22a) hat, und
der Flanschabschnitt (21b) des Luftfilters (21) abnehmbar durch eine Klemme (23) an dem Flanschabschnitt (22a) der Filterabstützung (22) befestigt ist.

14. Lufteinlaßeinheit gemäß einem der Ansprüche 10 bis 12, **dadurch gekennzeichnet, daß**
der Luftfilter (21) ein Filterbauteil (21a) zum Filtern von Ansaugluft und einen Flanschabschnitt (21b) hat, der sich von einem äußeren Umfang des Filterbauteils (21a) nach außen erstreckt;
die Filterabstützung (22) eine Nut (22d) an einem inneren Umfang hat; und
der Flanschabschnitt (21b) des Luftfilters (21) elastisch in die Nut (22d) eingepaßt ist.

## Claims

1. An air intake unit for an internal combustion engine, which has the following components:
an air filter (21) for filtering air which is supplied to the internal combustion engine (10),
a filter housing (12, 13) for accommodating the air filter (21), and
an induction manifold (100) for the introduction of the air filtered by the air filter (21) into an air intake opening (10a),
**characterised in that**
the induction manifold (100) is arranged in the filter housing (12, 13) and together with the filter housing (12, 13) forms a double-wall structure which is composed of a passage wall of the induction manifold (100), which is provided in an inner wall (14), and a wall of the filter housing (12, 13), which is provided in an outer wall (16), wherein a noise-and-heat insulating layer (18) is arranged between the inner wall (14) and the outer wall (16).

2. An air intake unit according to claim 1 **characterised in that** a part (40, 41) of a system for supplying fuel to the engine (10) is disposed in the housing (12, 13).

3. An air intake unit-according to claim 2 **characterised in that** the part of the system for supplying fuel is an injection nozzle (40) for the injection of fuel into the internal combustion engine (10).

4. An air intake unit according to one of claims 1 to 3 **characterised in that** the filter housing (12, 13) is of a double-wall structure which is composed of the inner wall (14, 15) and the outer wall (16, 17) and a noise-and-heat insulating component (18, 19) arranged between the inner wall (14, 15) and the outer wall (16, 17).

5. An air intake unit according to one of claims 1 to 4 **characterised in that** the noise-and-heat insulating component is a layer of air (18, 19).

6. An air intake unit according to one of claims 1 to 4 **characterised in that** the noise-and-heat insulating component is a noise-and-heat insulating material which is introduced between the inner wall (14, 15) and the outer wall (16, 17).

7. An air intake unit according to one of claims 1 to 4 and 6 **characterised in that** the noise-and-heat insulating layer is produced from a foamed material.

8. An air intake unit according to claim 7 **characterised in that** the noise-and-heat insulating layer is a component which is produced from a foamed material which is stuck to the filter housing (12, 13).

9. An air intake unit according to claim 7 **characterised in that** the noise-and-heat insulating layer is made from a foamed material when the filter housing (12, 13) is formed.

10. An air intake unit according to one of preceding claims 1 to 9 further **characterised by**
an outlet duct (24) which is arranged in the filter housing for introduction of the air filtered by the air filter (21), wherein the outlet duct (24) has a filter support (22) at its open end, which removably supports the air filter (21) separately from the filter housing (12, 13).

11. An air intake unit according to claim 10 **characterised in that** disposed in the filter housing is a throttle flap (25) which is connected to the outlet duct (24) and the induction manifold (100).

12. An air intake unit according to claim 11 **characterised in that**
the air filter (21) and the filter support (22) are arranged at an upper portion of the filter housing (12, 13), and
the outlet duct (24), the throttle flap (25) and the induction manifold (100) are arranged in the filter housing (12, 13) lower than the air filter (21) and the filter support (22).

13. An air intake unit according to one of claims 10 to 12 **characterised in that**
the air filter (21) has a filter component (21a) for filtering the induction air and a flange portion (21b) which extends outwardly from the outer periphery of the filter component (21a),
the filter support (22) has a flange portion (22a), and
the flange portion (21b) of the air filter (21) is secured removably by a clip (23) to the flange portion (22a) of the filter support (22).

14. An air intake unit according to one of claims 10 to 12 **characterised in that**
the air filter (21) has a filter component (21a) for filtering the induction air and a flange portion (21b) which extends outwardly from the outer periphery of the filter component (21a),
the filter support (22) has a groove (22d) at an inner periphery, and
the flange portion (21b) of the air filter (21) is fitted elastically into the groove (22d).

## Revendications

1. Module d'admission d'air pour un moteur à combustion interne, comportant les éléments suivants :
un filtre à air (21) pour filtrer l'air qui est fourni au moteur à combustion interne (10),
un carter de filtre (12, 13) pour loger le filtre à air (21), et
un collecteur d'admission (100) pour introduire dans un orifice d'admission d'air (10a) l'air filtré par le filtre à air (21),
**caractérisé en ce que**
le collecteur d'admission (100) est disposé dans le carter de filtre (12, 13) et forme, conjointement avec le carter de filtre (12, 13), une structure à double paroi qui est constituée d'une paroi continue du collecteur d'admission (100), laquelle est ménagée dans une paroi intérieure (14), et d'une paroi du carter de filtre (12, 13), laquelle est ménagée dans une paroi extérieure (16), une couche d'isolation acoustique et thermique (18) étant disposée entre la paroi intérieure (14) et la paroi extérieure (16).

2. Module d'admission d'air selon la revendication 1, **caractérisé en ce qu'**une partie (40, 41) d'un système de fourniture de carburant au moteur (10) est logée dans le boîtier (12, 13).

3. Module d'admission d'air selon la revendication 2, **caractérisé en ce que** la partie du système de fourniture de carburant est un injecteur (40) pour injecter du carburant dans le moteur à combustion interne (10).

4. Module d'admission d'air selon une des revendications 1 à 3, **caractérisé en ce que** le carter de filtre (12, 13) possède une structure à double paroi qui est constituée des parois intérieure (14, 15) et extérieure (16, 17) et d'un élément d'isolation acoustique et thermique (18, 19) qui est disposé entre la paroi intérieure (14, 15) et la paroi extérieure (16, 17).

5. Module d'admission d'air selon une des revendications 1 à 4, **caractérisé en ce que** l'élément d'isolation acoustique et thermique est une couche d'air (18, 19).

6. Module d'admission d'air selon une des revendications 1 à 4, **caractérisé en ce que** l'élément d'isolation acoustique et thermique est un matériau d'isolation acoustique et thermique qui est introduit entre la paroi intérieure (14, 15) et la paroi extérieure (16, 17).

7. Module d'admission d'air selon une des revendications 1 à 4 et 6, **caractérisé en ce que** la couche d'isolation acoustique et thermique est fabriquée à partir d'un matériau expansé.

8. Module d'admission d'air selon la revendication 7, **caractérisé en ce que** la couche d'isolation acoustique et thermique est un élément structurel qui est fabriqué à partir d'un matériau expansé, lequel est collé au carter de filtre (12, 13).

9. Module d'admission d'air selon la revendication 7, **caractérisé en ce que** la couche d'isolation acoustique et thermique est fabriquée à partir d'un matériau expansé lorsque le carter de filtre (12, 13) est formé.

10. Module d'admission d'air selon une des revendications précédentes 1 à 9, également **caractérisé par**
un conduit d'échappement (24) qui est disposé dans le carter de filtre pour introduire l'air filtré par le filtre à air (21), le conduit d'échappement (24) possédant, à son extrémité ouverte, un support de filtre (22) qui soutient le filtre à air (21) de manière amovible et séparée du carter de filtre (12, 13).

11. Module d'admission d'air selon la revendication 10, **caractérisé en ce que**
dans le carter de filtre est disposé un clapet d'étranglement (25) qui est relié au conduit d'échappement (24) et au collecteur d'admission (100).

12. Module d'admission d'air selon la revendication 11, **caractérisé en ce que**
le filtre à air (21) et le support de filtre (22) sont disposés au niveau d'une portion supérieure du carter de filtre (12, 13), et
le conduit d'échappement (24), le clapet d'étranglement (25) et le collecteur d'admission (100) sont disposés, dans le carter de filtre (12, 13), plus bas que le filtre à air (21) et le support de filtre (22).

13. Module d'admission d'air selon une des revendications 10 à 12, **caractérisé en ce que**
le filtre à air (21) possède un élément filtrant (21a) pour filtrer l'air aspiré et une portion formant bride (21b) qui s'étend vers l'extérieur à partir d'une périphérie extérieure de l'élément filtrant (21a),
le support de filtre (22) possède une portion formant bride (22a), et
la portion formant bride (21b) du filtre à air (21) est fixée à la portion formant bride (22a) du support de filtre (22) de manière amovible au moyen d'une mâchoire (23).

14. Module d'admission d'air selon une des revendications 10 à 12, **caractérisé en ce que**
le filtre à air (21) possède un élément filtrant (21a) pour filtrer l'air aspiré et une portion formant bride (21b) qui s'étend vers l'extérieur à partir d'une périphérie extérieure de l'élément filtrant (21a) ;
le support de filtre (22) est pourvu d'une gorge (22d) au niveau d'une périphérie intérieure ; et
la portion formant bride (21b) du filtre à air (21) est ajustée élastiquement dans la gorge (22d).
